# EUROPEAN PATENT SPECIFICATION

(11) **EP 0 820 186 B1**
(45) Date of publication and mention of the grant of the patent: **02.07.2003**
(21) Application number: 95914541.8
(22) Date of filing: 07.04.1995
(51) Int. Cl.: H04N 1/387, H04N 1/41, G06T 3/00

(54) **SIGNAL PROCESSOR**
SIGNALPROZESSOR
PROCESSEUR DE SIGNAUX

(43) Date of publication of application: 21.01.1998
(73) Proprietor: Hitachi, Ltd., Chiyoda-ku, Tokyo 101 (JP)
(72) Inventor: INUZUKA, Tatsuki, Ibaraki 316 (JP); NAKAMURA, Toshiaki, Ibaraki 312 (JP); NAKAMURA, Kouzou, Ibaraki 313 (JP); NAKASHIMA, Keisuke, Ibaraki 319-12 (JP)
(74) Representative: Beetz & Partner Patentanwälte
(86) International application number: JP9500688
(87) International publication number: WO96031974

(56) References cited:
- EP-A- 0 392 753
- JP-A- 3 040 560
- JP-A- 4 087 473
- JP-A- 4 150 577
- JP-A- 4 276 983
- JP-A- 4 328 956
- JP-A- 5 002 639
- JP-A- 6 217 106
- US-A- 5 170 263

## Description

### Background Art

This invention is concerned with a compression, decompression and editing apparatus of signals and it particularly relates to an apparatus for printing and displaying images.

### Technical Background

In laser beam printers, for example, processes of transfer of recording paper and printing are executed at the same speed. Since data are output so as to match the picture signal sent from a host computer with the printing speed of a printing device, a memory for storing image data of at least one image is mounted in general. However, the memory of the huge capacity becomes necessary in order to realize the high picture quality of high resolution and high gradation, color, etc..

An example of a printing apparatus for reducing memory capacity in order to eliminate the above problem is disclosed as the first prior art in a preprint of "Image compression encoding method optimized for a full-color printer", Japan Hardcopy '94 Fall Meeting, The 74th Conference of Japan Hardcopy for the Society of Electrophotography of Japan, Nobutaka Miyake, p. 13 - 16 (Dec. 2, 1994). According to this paper, the memory capacity for storing the image data is reduced by using the image compression encoding means of combining the discrete cosine transformation and the quantization.

Further, as means for signal compression of a fixed compression rate, the LSI under the product name of FBTC (IMAGE DATA COMPRESSION & DECOMPRESSION LSI) and the type name of M65790FP is described in the Mitsubishi Electric Corporation's data sheet (the second prior art). This realized the constant compression rate of 8/3 for black and white images so that the memory address at the time of the output of the compression data is converted to realize processing of rotation and synthesis. However, there are the following problems in the first prior art.
(1) The image data are processed by using the compression method which combines the discrete cosine transformation and the quantization. In this compression method, quantity of compressed data, that is, the compression rate changes in accordance with the patterns of the images. Therefore, the memory capacity must be designed, considering the worst compression rate.
(2) It is necessary to store image data of at least one page and rewrite the stored data so as to input page description languages such as Post Script as a command from the external apparatus, and to form and edit the image data. Since the compression rate changes in accordance with the pattern of images, there is no regularity of the memory address in which the compression data are stored. Therefore, even if the image data to be rewritten is part of the image plane, all image planes must be decoded. Further, when the data of the part of the image is rewritten, the compression rate of the part changes and writing into the memory area can not be done.
(3) the picture quality degradation easily occurs due to compression processing of the image data. The above second prior art has only the function for compressing and decompressing image data of every one image unit. And this prior art does not consider the editing function in order to rewrite the compression data stored. In addition, since the object of the prior art is the black and white image, signal processing of each color is executed in the time series, or several LSIs are necessary in order to carry out signal processing for the color image.

US 5,170,263 shows an image processing system having data compressing means, data storage means, data decompressing means and control means, whereby image data derived from an image input terminal is compressed, stored, decompressed, and transferred to the image output terminal. Additional bypass means are inserted between the input and output terminals of the data compressing means and the data decompressing means to perform image editing by using the data storage means without using an additional image storage. Accordingly, it is known from this document that an signal processing equipment comprises compression means, storing means and decompression means.

It is an object of the present invention to provide a signal processing equipment which can read compressed color image data in synchronism with a timing of outputting the data to an output device.

### Description of the Invention

This object is solved according to the features of the independent claim; the dependent claims refer to preferred embodiments of the invention.

In order to realize signal processing equipment the following elements are provided.

Compression means for converting signals into compression data on the basis of a compression procedure;
Storing means for storing the compression data; decompression means for restoring the compression data from the
Decompression means for restoring the compressed data from the storing means in accordance with a decompression processing; and
Editing means for executing signal processing of the decompression signals;
wherein the signals as the edit object are restored by using the decompression means from the storing means, and the processing result by the edit means is stored in the storing means by using the compression means.

Further, signal processing equipment with the following elements is provided:
Compression means for converting signals into the compression data on the basis of the compression procedure;
Storing means for storing the compression data;
Decompression means for restoring the compression data from the storing means on the basis of a decompression procedure; and
Edit means for executing processing of the signals as the object stored in the storing means;
wherein the signals to be edited object are read out from the storing means, and the processing result by the edit means is stored in the storing means.

In addition, signal processing equipment with the following elements is provided:
Compression means for converting signals into the compression data in accordance with a compression procedure;
Storing means for storing the compression data;
Decompression means for restoring the compression data from the storing means in accordance with a decompression procedure;
Edit means for executing signal processing of the decompressed signals; and
A switch for changing destination of the output of the signals restored by the decompression means;
wherein the switch changes the destination of the outputs by the edition or the output of the signals.

The capacity of the memory for storing the image data is reduced, and at the same time, the data transfer rate between the means or elements is reduced so that the formation and edition of the image data can be executed at a high speed, and advantages not in the conventional signal processing equipment can be obtained.

### Brief Description of Drawings

Fig. 1 shows the most basic construction of signal processing equipment.

Fig. 2A and Fig. 2B show the basic constructions of the signal processing equipment. Fig. 2A shows edition using input signals and signals stored in the storing means, and Fig. 2B shows execution of edition processing on the basis of the edition command.

Fig. 3A and Fig. 3B show the basic constructions of the signal processing equipment. Fig. 3A shows the construction of the apparatus for decompressing and transmitting the edited signals, and Fig. 3B shows the construction of the apparatus with the signal formation means for forming the compression data form.

Fig. 4A is the basic construction of the printer, and Fig. 4B and Fig. 4C show an example of the printer controller.

Fig. 5A and Fig. 5B explain the edit job of the image data. Fig. 5A shows rewriting of the image data, and Fig. 5B shows rewriting of the compression data.

Fig. 6A and Fig. 6B explain the memory address of the compression data. Fig. 6A shows the case of the fixed compression rate, and Fig. 6B shows the case of the variable compression rate.

Fig. 7A to 7F shows the signal processing of the printer controller. Fig. 7A shows the data input of the pixel order and line order. Fig. 7B shows the data input of image color-plane order. Fig. 7C shows the signal output (the image color-plane order) to the laser beam printer. Fig. 7D shows edit processing (overwriting of the image data). Fig. 7E shows edit processing (overwriting on the stored image data). Fig. 7F shows the expansion function (reduction of the picture quality degradation by the memory duplication).

Fig. 8 illustrates an example of the timing chart of signal processing.

Fig. 9 shows an example of the printer controller.

Fig. 10A, Fig. 10B and Fig. 10C show three constitutional examples of the signal processing equipment for displaying the color images, the characters, the graphs, etc. on the display unit.

Fig. 11 A shows an example of the screen of a filing apparatus and Fig. 11B a constitutional example of the filing apparatus.

Fig. 12A and Fig. 12B show the construction examples of one chip LSI. Fig. 12A shows the case of making one chip of the processor and the one image plane memory, and Fig. 12B shows the case of making one chip of the memory and the compression decompression means.

Fig. 13 shows an example of the construction of the game instrument and shows the storing means in detail.

Fig. 14A and Fig. 14B show the basic construction of the image display unit of the game instrument.

Fig. 15A shows an example of the program compression equipment, and Fig. 15B illustrates an example of the signal procedure of the program compression equipment.

Fig. 16 shows the construction of the multimedia apparatus.

Fig. 17 is an example of the compression method of color image.

### Best Mode for Carrying Out the Invention

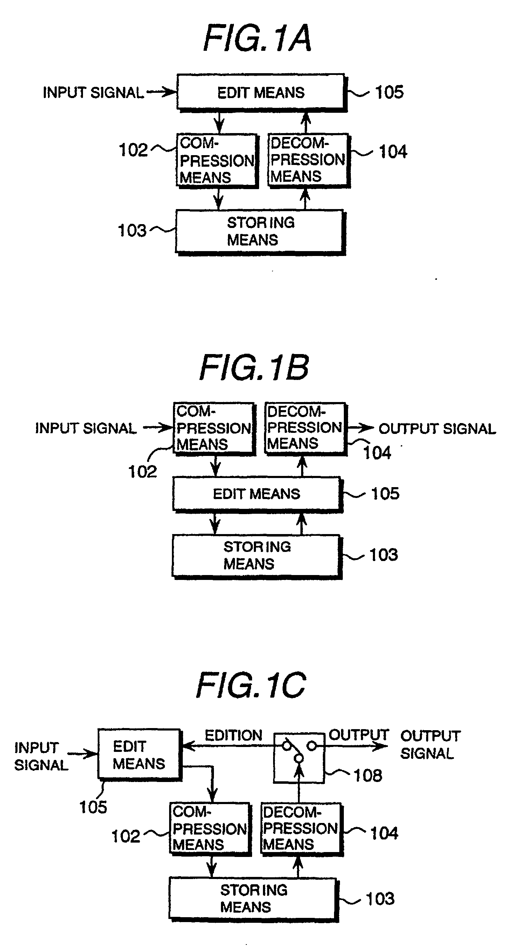

The most basic construction of signal processing equipment is shown in Fig. 1, wherein the input signals are converted into the compression data by compression means 102. The compression data is stored in storing means 103, and decompression means 104 restores the compression data. And then, edit means 105 carries out edit processing by means of the signals stored in the form of the compression data in storing means 103 and of input signals. Here, there a the case that the input signals are the signals which have the same characteristics as the signals stored as the compression data or that the signals are the command representing the kind of the signal processing for the signals stored as the compression data. For example, the input signals are expressed by the combination of the image data and the writing command for the image data, and the operation for re-writing the part of the signals stored as the compression data is executed. by interpreting the both signals by means of edit means 105.

In another example, edit means 105 executes the input signal processing of the rotation, expansion, compression, etc., for the signals stored as the compression data, using input signals. In any case, edit means 105 carries out the operation for reading out correctly the signals as the edit object from the signals stored as the compression data.

In Fig. 1B, edit processing of the signals stored in the form of compression data in storing means 103 is carried out by using edit means 105, without restoration of the signals by means of decompression means 104. This edit means does edit processing in the form of the compression data on the basis of the signal processing of compression means 102. In the coding method of the fixed compression rate, for example, because the information relating to the data constitution and the data quantity of the compression data is already known, the signals on the basis of the form of compression data are generated on the basis of the information. The edit processing for the signals stored in the form of compression data in storing means 103 can be carried out in the form of compression data.

In Fig. 1C, the input signals are converted into the compression data by compression means 102, and the compression data are stored in storing means 103. Decompression means 104 restores the compression data. And then, switch 108 selects whether the restored signals are output (output direction) or are transmitted to edit means 105(edit direction). Edit means 105 carries out edit processing by using the signals and the inputs signal stored in the form of compression data in storing means 103. As was mentioned above, in the image data, for example, the edit means executes the signal processing of overwrite, re-writing, rotation and expansion, etc. by using the input signals. At the time of the signal output, it is not necessary to make edit means 105 operate because the edit processing for the output signal is unnecessary. Switch 108 outputs the signal in the output direction. The compression means and the decompression means reduce redundant information on the basis of the characteristics of the signals, the purpose of using the signals, etc. Upon the use purpose, there is the case where the loss-less is required, and vice versa. Even if the use purpose is the same, there is the case where redundancy is different according to the characteristics of the signal output unit. The present invention does not limit the concrete construction of the compression means and the decompression means.

When the signal procedure of the fixed compression rate is used, the signals formed by the input means or by the formation means and the compression data of the storing means are associated with each other in the constant rules on the basis of the signal processing of the fixed compression rate. In case of the image data as an example, the place of the image and the memory address (storing means) can be transformed by the simple operational expressions, the table, etc. on the basis of the rules of the constant. From this feature, for executing rewriting of the signals using the edit means, only the signals for rewriting are output from the storing means and can be input into the edit means.

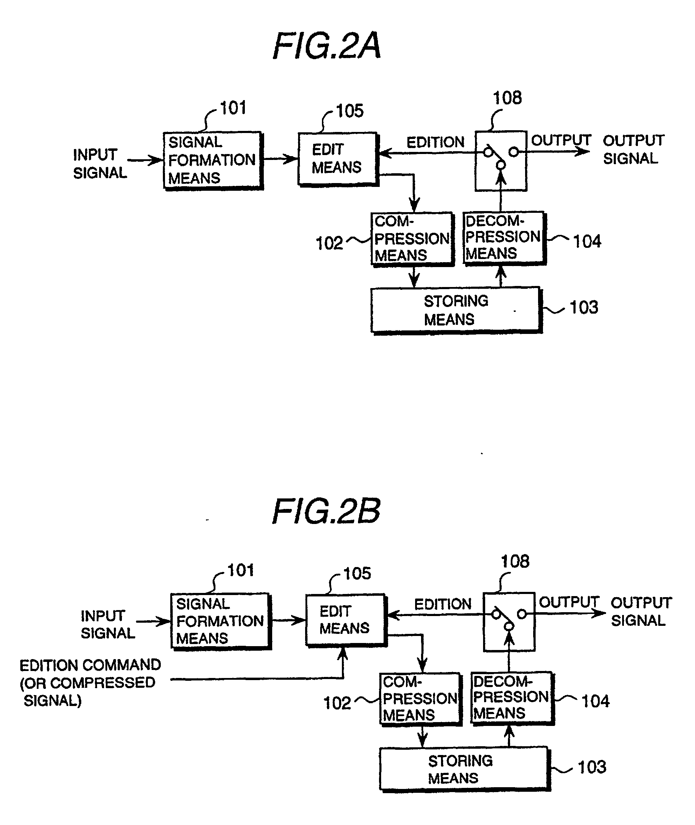

Fig. 2 shows the construction example of the apparatus that edits the signals stored in the storing means in the case where the input signals are commands based on the page description language. In Fig. 2A, in case of the command that instructs the signal formation on the basis of the page description language, the signals are generated by using signal formation means 101 based on the input signals. In Fig. 2B, in case of command that instructs the signal transformation on the basis of the page description language, edit processing is executed by using both of the signals formed by using signal formation means 101 and the signals stored in the form of the compression data in storing means 103 and restored by using decompression means 104. In Fig. 2, shown is the example corresponding to the apparatus construction of Fig. 1C. It is needless to say that the apparatus construction of Fig. 1A or Fig. 1B can be used.

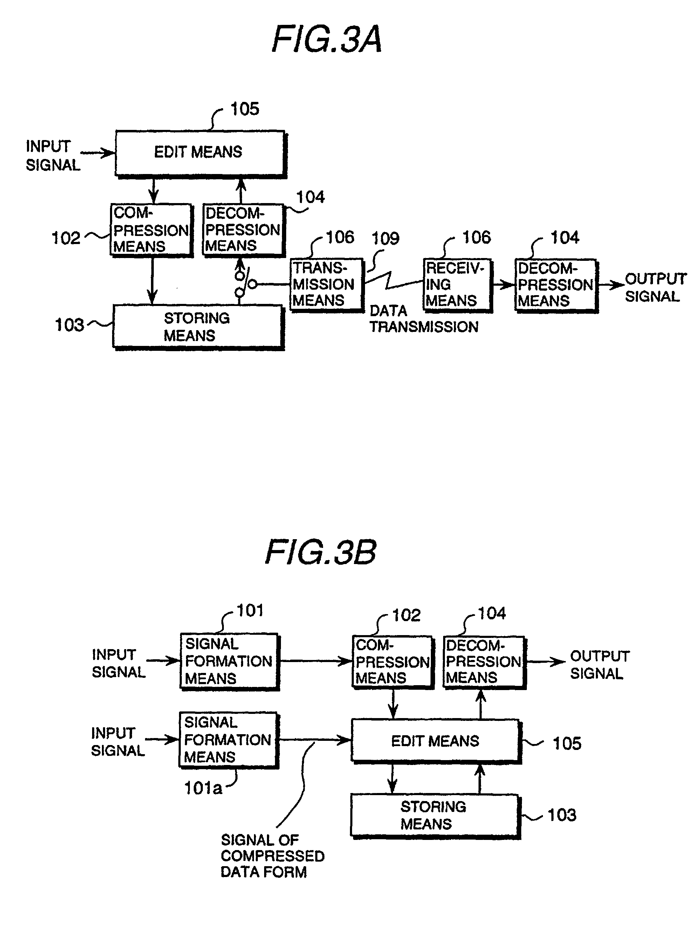

Fig. 3A shows the construction wherein the apparatus that actually uses the signals restored by using decompression means 104 is constituted by the apparatus having compression means 102, transmission means 106, receiving means 107 and network 109. Because the data transmission is done by using the compression data, shortening of the transmission time can be realized. There is also an effect of reducing the cost of the receiving apparatus, because storing means 103 is not necessary on the receiver side. Fig. 3B shows the construction example in case signal formation means 101a generates the signals of the compression data form. As was explained above, in case of the coding method of the fixed compression rate, because the information relating to the data construction and the data quantity of the compression data is known in advance, the signals of the compression data form can be generated on the basis of the information. As a result, because signal processing for the compression need not be done, effects such as shortening of the signal processing time can be realized.

In the above example, the coding method of compressing in the fixed compression rate can be used as a compression and decompression means. In the color image as signals, for example, in order to realize the fixed compression rate, it is possible to employ means for dividing an image into blocks constituted by several pixels and for converting the signals in the blocks into the selection signals representing the color signals of two kinds or so and difference (image-resolution) among the signals.

On the other hand, the compression method of variable compression rate can be used. But, in case of the variable compression rate, it is necessary to dispose means for associating the memory address of the index and the compression data representing the location of the image at the time of the compression of the image data. Rewriting of the image data at the specific place is carried out by referring to the means for associating and by restoration of the compression data in the storing means. As the data quantity changes, when the image data after rewriting is compressed, signals sometimes cannot be stored in the former place. Therefore, writing is done to the empty part of the storing means, and the memory address is newly set to the means for associating. If this procedure is used, while the compression means of the variable compression rate can be used, the storing means control method becomes complicated. If attention is paid to the declination of the processing speed, the above compression method can be used without problem.

Yet, as the compression method, block approximation code (Block Truncation Coding), Huffman code, Arithmetic Coding and LZ (Lempel, Ziv), LZW code which is its improved type, etc. can be used. The present invention does not limit the compression method. While as a pretreatment of the compression, means such as the calculation of the finite difference value, the orthogonal transformation, wavelet transformation, histogram detection, edge detection, the range separation, the color transformation and the block approximation can be used.

As described above, the signal processing equipment realizes reduction of the capacity of the storing means and high speed of signal processing by using the compression means, the decompression means, the stock pile means and the edit means. From the viewpoint of the signal flow, the construction for processing and transmitting the signals as compression data can be realized, except for the input and output means of signals. Even in case the signals must be processed in the form of the original data, only the signals as the object of processing are handled as the original data. Further, as storing means 103, apparatuses such as semiconductor memories, flash type memories, hard disc apparatus, optical magnetic discs, etc. can be used.

An example of the present invention is explained by using the apparatus below.

### (1) A printer controller

The printer controller inputs commands such as the page description language from the host computer, and the image data formed and edited on the basis of the commands are output to the printing means called a printer engine. There is also a construction by which the formation and edition of the image data are executed on the host computer side and then the image data are transmitted according to the scanning order of the printer engine. In this constitution, there is a problem that the data transfer time becomes longer, but this example can be presumed as the host computer performs the function of the printer controller.

Here, in the printer controller it is normally difficult to carry out formation and edition of the image data in synchronizing with the operation of the printer engine, from the viewpoint of the signal processing speed. Therefore, in general, means for storing the image data for at least one image plane is disposed in the printer controller. Especially, in an apparatus that executes the printing of one image plane at the constant speed like the laser beam printer, delay of the formation and edition of the image data is not allowed, and therefore, it is desirable that all image data for one image plane are formed, edited and stored in advance.

Like this, as means for constituting the printer controller, the formation means, the edition means and the storing means of the image data have been considered necessary. In addition, signal transformation means was provided in order to improve the picture quality. But, as the improvement of picture quality reproduction ability in the printer engine increases, the printing image has changed from black and white to multi-color and further to full-color, and the pixel density becomes higher. As a result, the capacity of the image data constituting one image plane has become remarkably huge.

This has brought the following problems in the printer controller.
(a) The memory cost in the apparatus cost increases.
(b) The image data for the edition becomes huge, and time for signal processing becomes longer.
(c) Time for the data transfer among various means increases.

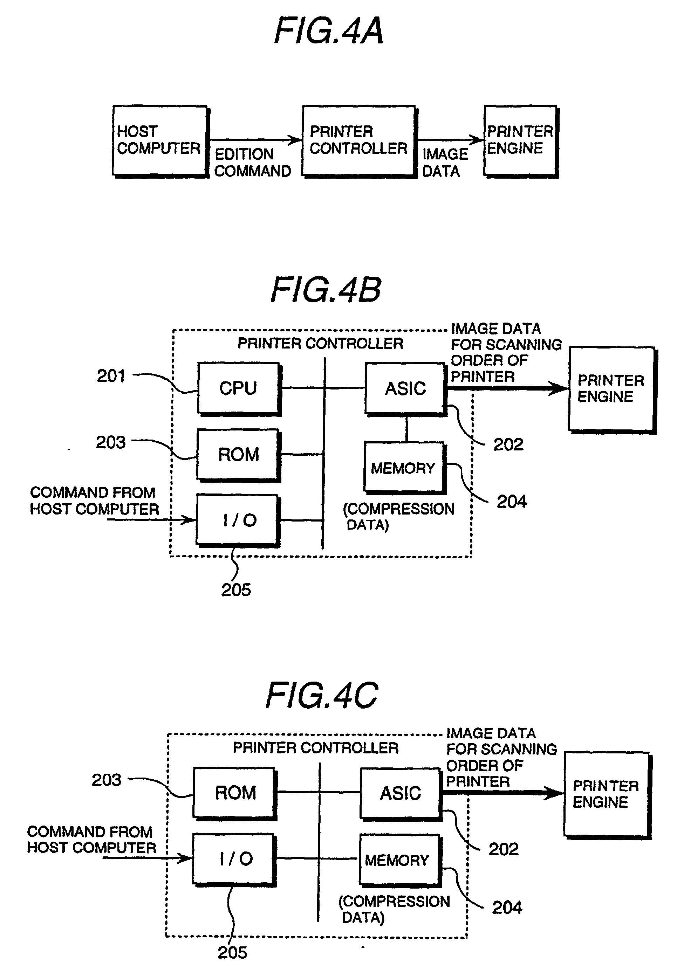

In order to solve the above problems, the example is explained by using Fig. 4.
Fig. 4A shows the basic construction of the printer. Fig. 4B shows an example of the construction of the printer controller. Fig. 4C shows another example of the construction of the printer controller.

Image data are formed and edited by using CPU 201 or ASIC (Application Specific IC) 202, based on the commands input by using input/output means 205 from the host computer. The image data are converted into the compression data and are stored in memory 204. And then, synchronizing with the timing of the printing means of the printer engine, the signal is output in the order. CPU 201 takes the program data from ROM (Read Only Memory) 203 storing the program to operate. Signal processing of the formation, the edition, etc. of the image data is executed by using either CPU 201 or ASIC 202 or both. Memory 204 has the memory capacity in which the image data for at least one image plane are stored as the compression data. This leads to execution of the formation or edition of the image data and to the matching of the data transfer rate and with the printer engine.

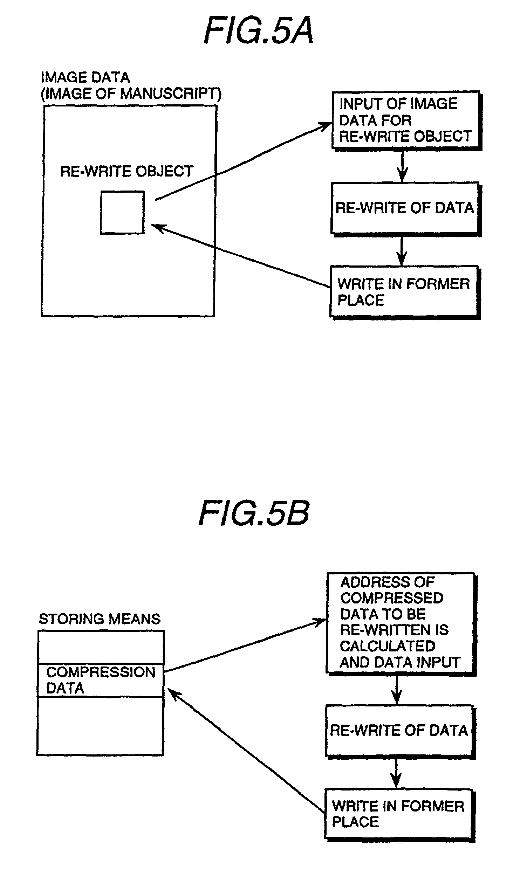

Fig. 5 explains the principle of the edition job of the image data, that is, the rewriting of data. As shown in Fig. 5A, if the image data are taken for the image of the manuscript, the image data of the rewriting object in a certain specific place are input and are re-written for the data, and the data are written in the former place. On the other hand, in case the compression data stored in the memory are taken, as shown in Fig. 5B, the memory address of the compression data for rewriting must be clear. In addition, the re-written compression data must be stored again in the memory .

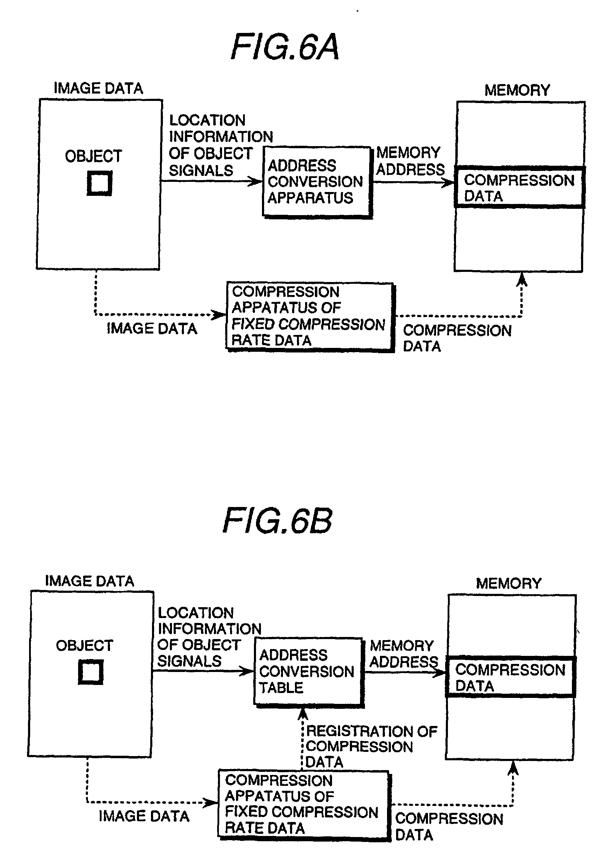

As shown in Fig. 6A, if the compression method is of the fixed compression rate, the compression data for rewriting are read out from the memory, as mentioned above, and the rewritten compression data can be stored again in the former memory area. However, in case of the variable compression rate, as shown in Fig. 6B, the data quantity of the compression data is different by the signal characteristics of the image which is the object to be compressed, the information about the data quantity is stored at the time of executing compression processing and the transformation means for the image place and the memory address must be prepared. When means for this transformation is prepared, edition processing using the compression data can be realized without depending on the compression method.

Reproducibility of color is one of the picture quality characteristics of the printer. For example, it is desirable that the same color is reproduced in the printing result of the display in the same image data. But, since the coloring principles of both are different, the signal transformation is indispensable. In case the compression method separates the color signals and the resolution of the image data, signal processing of high speed can be realized by the signal conversion only of the compression data relating to the color signal of the former.

And, there is a case in which the reproduction range of the color is limited as apparatus characteristics of the printer. In this case, it is useless to make the signal outside the reproduction range of the color as the processing object. For example, even if the signals outside the reproduction range of the color in the storing means are stored, there is no effect in the printing result, and the part of the capacity of the storing means is used uselessly. Then, it is desirable to adopt the signal system to remove the signal outside the reproduction range of the color.

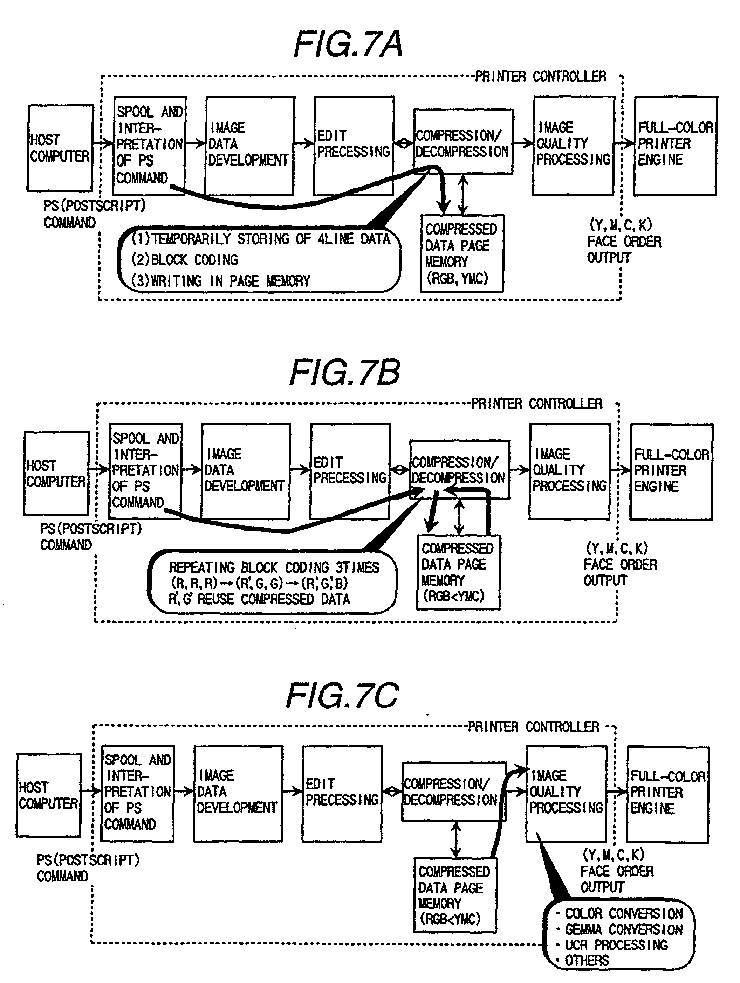

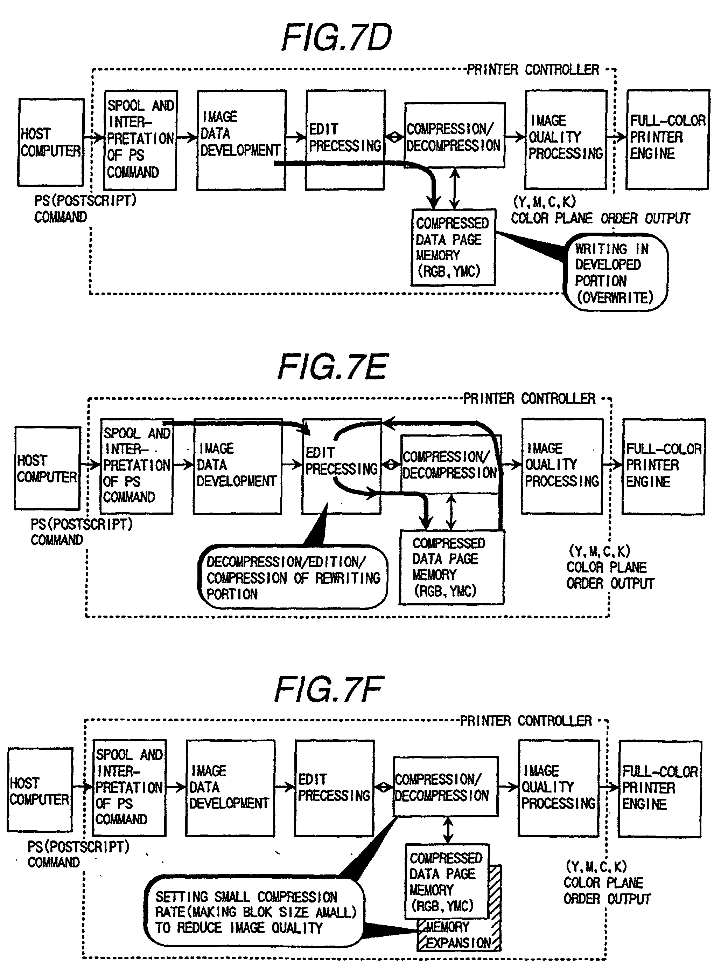

Fig. 7F to Fig. 7A show an example of the signal processing of the printer controller described above. On the basis of the command input from the host computer, the characters, graphics and the color images are developed, and are converted into the compression data by using the compression means to store them in the code memory. The compression data are restored by using the decompression means and output as the image data. Then, combining these means, picture quality processing, such as gamma transformation, color transformation, image area separation, UCR (Under Color Reduction ), edge emphasis, etc. is carried out. Further, only part for the object is expanded from the compression data stored in the code memory, edit processing, such as overwrite, rotation, expansion and minification, trimming, etc. is also carried out. These edit processing is executed on the basis of the command input from the host computer as mentioned before.
(a) Edit processing (re-writing of the image data)
   In this case, on the basis of the command input from the host computer, image data such as the characters, graphics and color image, etc. are written on without considering the image data of the background.
(b) Edit processing (overwriting on the stored image data)
   The image data for the background are overwritten on the image data from the host computer. In case the character data are overwritten, for example, The image data for the background in the range where the characters exist are expanded from the memory and the character data are written in every bit. The image data edited like this are compressed again and stores in the memory.
(c) Function expansion (reduction of the picture quality degradation by memory duplication)

The capacity of the code memory is not limited. The value of the fixed compression rate can be set to be able to store the compression data in the memory on the basis of the memory capacity. Therefore, for the use of the picture quality degradation which is not permissible, the degradation of the picture quality can be reduced by extending the memory capacity and lowering the compression rate of the compression method..

The above apparatus construction and the signal processing can exhibit the effect of the simplification of the apparatus construction and the signal processing in case of the fixed compression rate. However, even when the compression method is a variable compression, the effect of the memory cutback can be realized by storing the compression data by employing means for associating the image area with the compression data positions. There are the combinations of signal processing and means other than ones shown above. For example, picture quality processing can be processed by the host computer in advance, and the signal processing can be done before edit processing is executed. Based on the basic construction of the present invention like above, the effect of the memory cutback. can be obtained by storing the compression data.

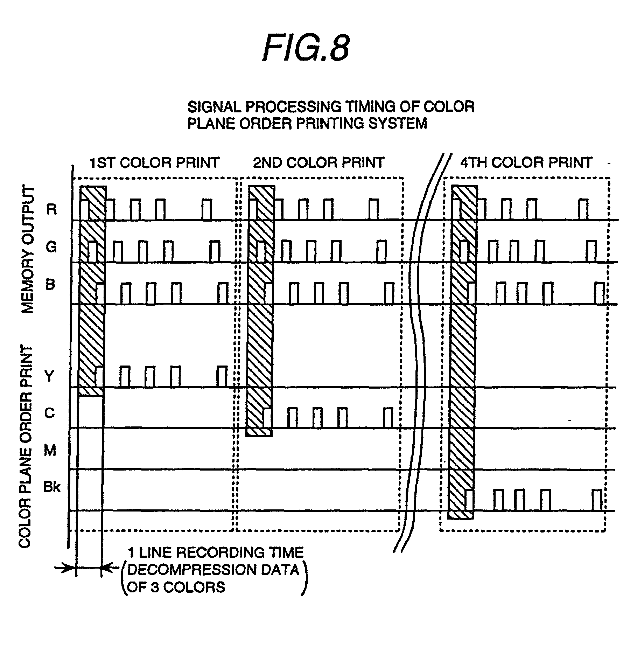

Fig. 8 is an example of the timing chart for outputting the color signal on the basis of the coloring principle of the printer engine in accordance with the color order of the printing means. In case the printing means of the printer engine prints each color in the color-plane order, the signals of one line for three colors is taken out from the storing means, and it is output after picture quality processing of the color transformation, etc. using the signal of the three colors, in order to output the signals of one color for one line. In order to improve the picture quality of the printing color, the printer sometimes prints using the ink or toner with the specific spectrum in addition to three elementary colors. One example is black color (Bk), which is generally called UCR (Under Color Reduction). since the black color signals are formed from the three elementary color signals by signal processing, the three elementary color signals need to be multiple value signals.

In the example of Fig. 8, when printing four colors (C, M, Y, BK) containing the black color signal, three elementary color signals (R,G,B) stored as compression data are read out from the storing means, and in case the coding method of the fixed compression rate wherein signals are output, the data construction of the compression data is understood. Only compression data necessary for the color transformation can be made as the object signals of the color transformation and speed-up of signal processing can be realized.

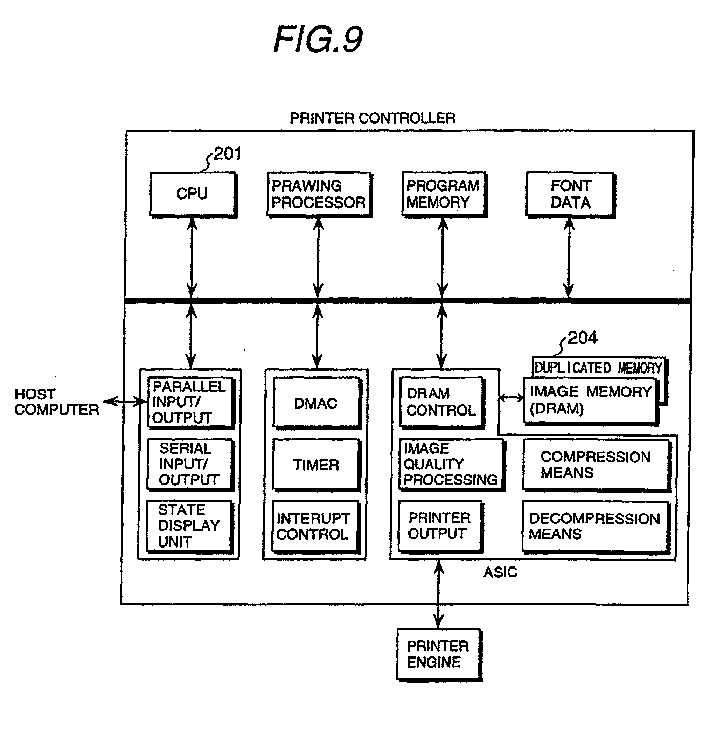

An example of the more detailed apparatus construction of the printer controller is shown in Fig. 9, wherein the apparatus is composed of CPU 201, memory 204, the signal input/output interface, etc. The example shows the construction, which can perform various apparatus characteristics of the printers. The ability of the printer engine is classified into the black and white two colors, black and white multiple values, multicolor, full-color, etc.. While appropriate apparatus constructions of the printer controllers are conceivable, it is possible to design the apparatus construction of the printer controller that can be commonly applied. The compression means and the decompression means can be realized by the hardware or signal processing of CPU 201, and several fixed compression rates can be selected on the basis of conditions such as the picture quality, the resolution and the memory capacity, etc.. By this selection, the means the conditions which are selected by the apparatus itself can be provided from the conditions of the apparatus.

### (2) A display unit

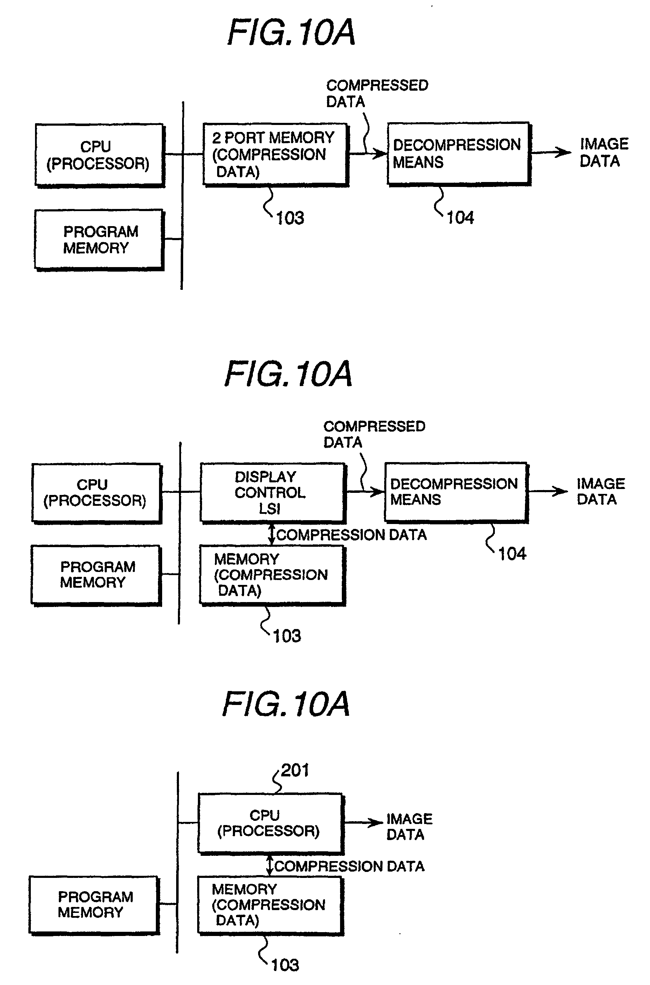

Three examples of the constitutions of the apparatus for displaying the color image, the characters, the graphs, etc. on CRT (Cathode Ray Tube), LCD (Liquid Crystal Display), etc. are shown in Fig. 10. In the conventional apparatus constructions of image displays, the input, formed or edited image data are stored in the frame memory of the bit map form, and they are output according to the scanning order of the display unit. Since the display unit itself does not have storing ability of the display data, the signals are output from the frame memory at the speed of 30 frames per second, for example.

Problems such as the increase of the memory capacity due to the picture quality improvement likewise with the printer controller occur. Thus, the image data are stored as the compression data, and the compression data are decompressed and are output step by step according to the scanning order and the display timing of the display unit so that the needed memory capacity can be reduced. According to this constitution, the frame memory of the so-called bit map form memory, that is, a memory construction by which the signals of the amplitude range are assigned to every display pixel is no longer necessary.

Fig. 10A shows the construction wherein the two port memory is used as storing means 103 for the compression data and the compression data of the memory are restored and output by using decompression means 104. The image data to be displayed are generated by CPU 201, and they are written in memory 103 after converting into the compression data. Thus, the image data of the non-compression other than the data output part of decompression means 104 are not transmitted to the interface for connecting between the elements. Therefore, the data transmission ability in each interface can be given an allowance.

Fig. 10B shows the construction for generating the image data to be displayed by using a display control purpose LSI. CPU 201 conveys the contents to be shown to the display control LSI as a command so that the LSI forms the image data. and the data are stored in the memory (storing means 103) in the form of the compression data. Therefore, the non-compression image data and compressed image data are not transmitted to the interface. Allowance of data transmission ability in the interface can be given further as compared with the case of Fig. 10A.

Fig. 10C is the construction which is effective for CPU 201 of the high signal processing capacity, wherein CPU 201 generates the image data, and it stores in the memory (storing means 103) in the form of the compression data. The image data to be displayed are decompressed and output. Since the data transfer between CPU 201 and memory 103 is performed by the compression data, data transmission ability in the interface can be given the allowance. There are advantages shown in the following when the above apparatus constructions are used.
(a) The image display with no visual degradation can be realized in a small memory capacity.
(b) In case of the signal output to the display unit of high resolution or frame rate, the data transfer rate from the storing means can be set low.
(c) The data quantity to be written in the storing means is small. Therefore, the overlap of the term for data writing and the term for the data output to the display unit can be reduced.

Further, in case the color reproduction which is one of the characteristics of the display unit is corrected by digital signal processing, the correction can be realized by the color transformation using the compression data. In the case where the three colors of red, green and blue are represented by the signals of 8 bits, for example, when the color transformation is realized by the translation table, the memory with the output data of 24 input address lines and 24 bits is necessary. On the other hand, when realizing by the calculation on the basis of the transformation expression, not by the translation table, signal processing corresponding to the translation table about each pixel is necessary. If the signal processing in the state of the compression data of the color signal can be done, the load of the calculation can be reduced. For example, in case the signals in the block composed of several pixels is represented by two kinds of colors and the selection signal showing their difference, the transformation can be done by using the compression data representing the color which is obtained by this procedure. Therefore, there is no need of decompression of the compression data. Because of cutback of the data quantity as the object of signal processing, advantages such as speed-up of the processing speed or simplification of the apparatus can be achieved.

In addition, when the coding method of fixed compression rate as mentioned above, the data construction of the compression data becomes clear, and when the input or the formation of the image data is executed in the form of the compression data, the data writing into the storing means can be executed without carrying out signal processing by the compression means.

### (3) A filing apparatus

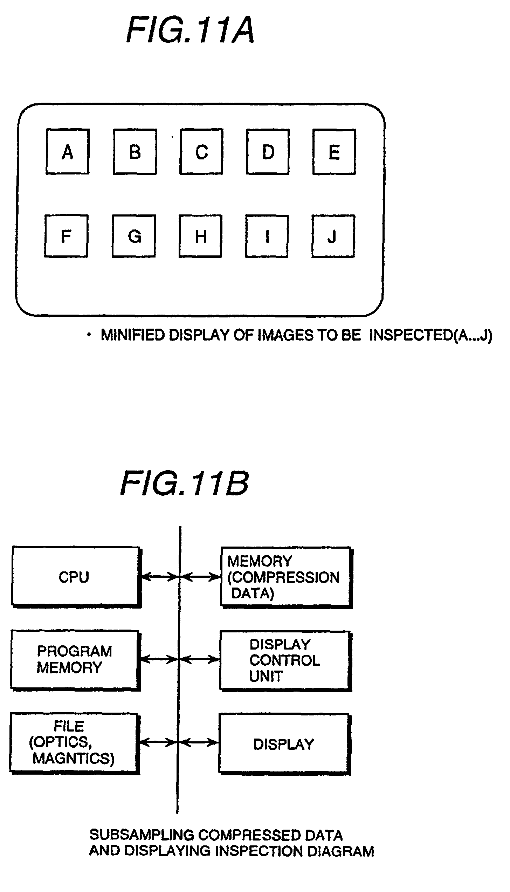

It is one of the functions required for the filing apparatus that retrieves at high speed and displays the image data stored in a large capacity file and converted into the compression data. In order to certainly and quickly find out the desired image data, only the retrieval using the keyword, etc. is not sufficient. It is desirable that the corresponding image shown in Fig. 11A is approximately displayed. For this purpose, the image data of all image planes are sub-sampled for the purpose of displaying image data of all image planes at minification. When the corresponding image data are sub-sampled after all the data are developed, the necessary memory capacity will become huge, and high speed decompression processing of the compression data and subsampling processing for a large quantity of data become necessary.

Then, the apparatus construction shown in Fig. 11B can be applied. The image data input from an external large capacity file are stored in the compression state in the storing means, and the subsampling of the compression data is carried out, and the data are restored to the image data and displayed. Since the compression data constitution is understood in advance by the coding method of fixed compression rate, the subsampling is easily conducted without expanding, and it is also possible to set the ratio of the subsampling corresponding to the minified magnification of the display. several outline image planes are displayed simultaneously by displaying only similar color signals taken out from the block, as shown in Fig. 11A, so that the data are retrieved and displayed at high speed.

Further, edit processing for the image data stored can be carried out easily, as was described above. In case of the fixed compression rate, since the rotation of the image plane and the minification are easy, the edit function, such as reducing a size of the A4 size by putting two pages side by side to output as A4 size plane, which is provided with the copying machine, etc. can be carried out easily.

### (4) LSI

In general, means for calculating and processing signals and means for storing signals are realized as different entities, and both are connected by data transfer means. As an embodiment, CPU (Central Processing Unit) or specified LSI is used for calculating processing, and a semiconductor memory or optical or storing means as signal storing, based on the optical or magnetic principle is used for signal storing, and electric wiring is used for data transmission.

There are also problems in the constitution of these means stemming from the picture quality improvement. That is, they are the increase of the memory cost, the signal processing time, the increase of the data transfer time, etc.. And then, execution of the data transfer between the means in the form of the compression data is effective for solving the problems.

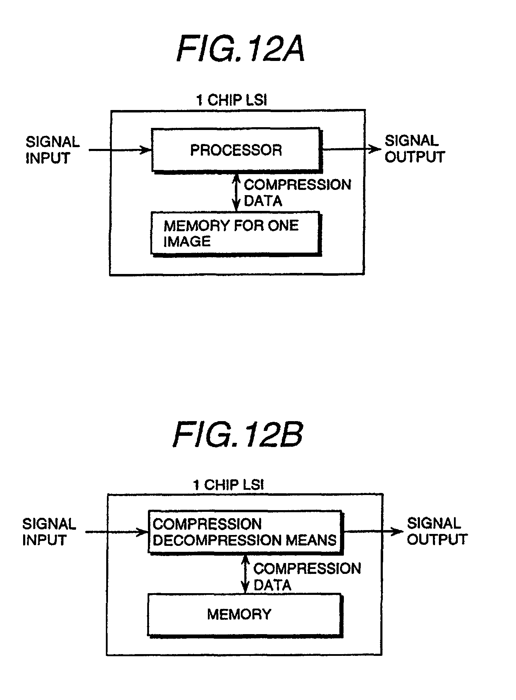

Next, as the progress of LSI technology, unification of the calculation and processing means and the signal storing means was realized so that the present invention can be applied to the case of so-called one chip. As shown in Fig. 12A, for example, if the memory for storing the image data for one image plane is united with the calculation and processing means as one chip becomes one chip, the apparatus constitution of which the image data at the time of processing closed in one chip LSI is realized. The processing object is not limited to the two-dimensional plane image. There are the same advantages in the animation image with the time factor, image planes related to multidimensional spaces, etc. as mentioned above. Further, as shown in Fig. 12B, if the compression and the decompression means are built in the memory chip for the storing means, the memory chip can be dealt with as a memory chip of the large memory capacity by the rate of the compressibility. For realizing high speed signal input/output, such as cache memory is built in.

### (5) Game instrument

In general, the instrument which carries out the image formation, the edit and the display on the basis of the interactive procedure is called TV game instrument, and signal processing is carried out at the frame rate of the animation image. Here, the point different from the construction example of the apparatus is that means for the formation and procedure of the image formation is built in. Therefore, for the purpose of the compression of the image data, the image formation can be carried out based on the form of the compression data at the step of the formation of the image.

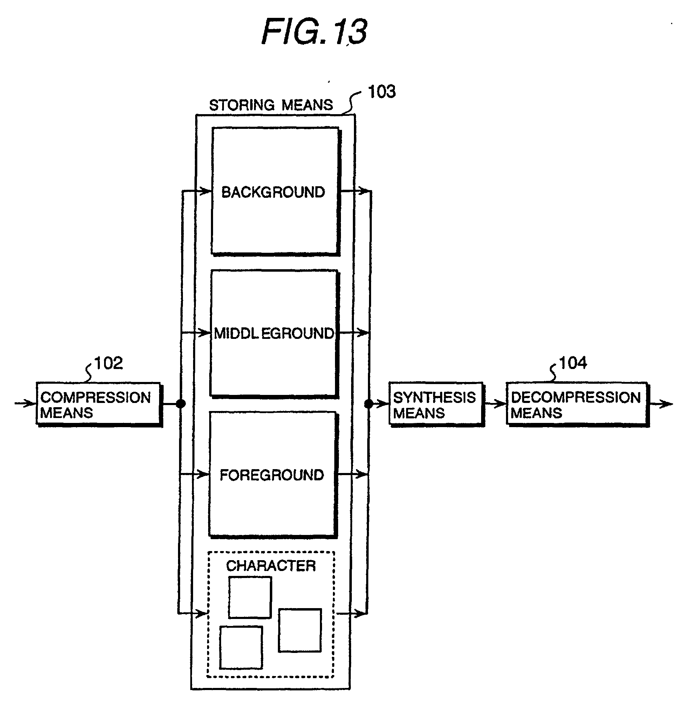

As shown in Fig. 13, the image data can be separated into the background, the middleground, the foreground, the characters, etc. on the basis of the elements of the image plane, and the constitutions of compression means 102, storing means 103 and decompression means 104 can be set on the basis of the characteristics which are different respectively. For example, a relatively high compression rate can be set in the case where a certain degradation of the picture quality about the background. is permitted. While the degradation of picture quality is not permitted about the noticed character, the maximum image plane size can be set small to make non-compressed image data. The parallel transfer of the background image plane can be done by modifying the address for reading out the compression data.

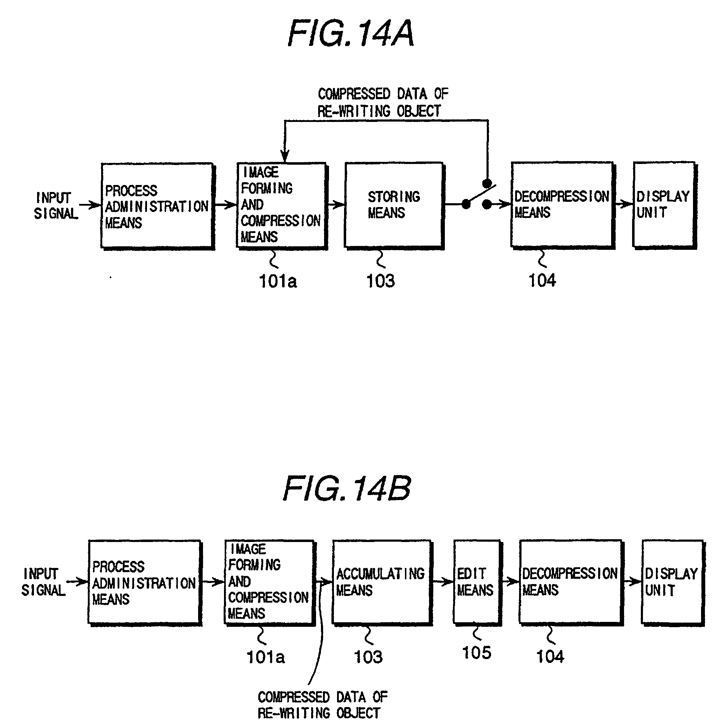

For the data compression of the color image plane, for example, in case the signals in the block composed of several pixels are represented by selection signals for two kinds of colors and their difference, it is easy to carry out the image formation in the form of the compression data made by this procedure. Several kinds of colors representing the inside of the block are decided, and the allocation in the block of the set colors is decided. The size of this block is not always fixed, but can be set at the external form of a body to be displayed. There are advantages shown in the following.
(a) The color signals should be generated at every block unit.
   That is, because it is not necessary to generate the color signals of each pixel, the processing speed can be increased.
(b) Because the compression means is not always equipped as another element, the apparatus construction can be simplified.
(c) Because the image data are handled by the compressed format except for the data output to the display means, the transfer speed of data can be set low. In addition, signal processing of high speed is possible because only rewriting object of the image can be edited. Two basic constitutions for realizing these features are shown in Fig. 14A and Fig. 14B. As the initial value of the compression data, the signals representing the maximum value, the minimum value, any signal level or any color of the amplitude range of the signals has only to be written in the storing means in advance, the data value can be directly written in the storing means without operating the compression means.

### (6) Converter of the external input signal

The signals input from the external are input through the transmission means on the basis of some communications protocols or the storing means, etc. on the basis of the optical or magnetic principle as compression data or the non-compression data. The compressed data can be restored by the decompression means, and are converted into the compression data by the corresponding compression means.

When the compression data input from the external are not restored at one time but restored step by step, the capacity of the means for storing the restored signals can be made small. Further, when the signals input from the outside are the image data, the means for judging the input order, etc. of the pixels and the kind of colors that constitute the data in advance is provided. For example, the following judgments are made.
(a) The header information added to the head of the data is judged.
(b) The specific marker cord (showing the paragraph of the plane) for the compression data of the variable compression rate is retrieved and the face of the color image is divided.

### (7) Program compression equipment

In the explanation of the above example, the same effects can be obtained by applying the signal processing equipment to ripple data such as the audio, the character codes, etc., without limiting the image data of the signals.

For example, in the apparatus construction using the processor for executing the calculation, the data transfer, etc. based on the program, when the program is stored as the compression data and when the decompression processing is executed in the processor core, the following are achieved.
(a) The capacity of the program storing memory is reduced.
(b) The data transfer quantity between the processor and the program storing memory can be reduced.

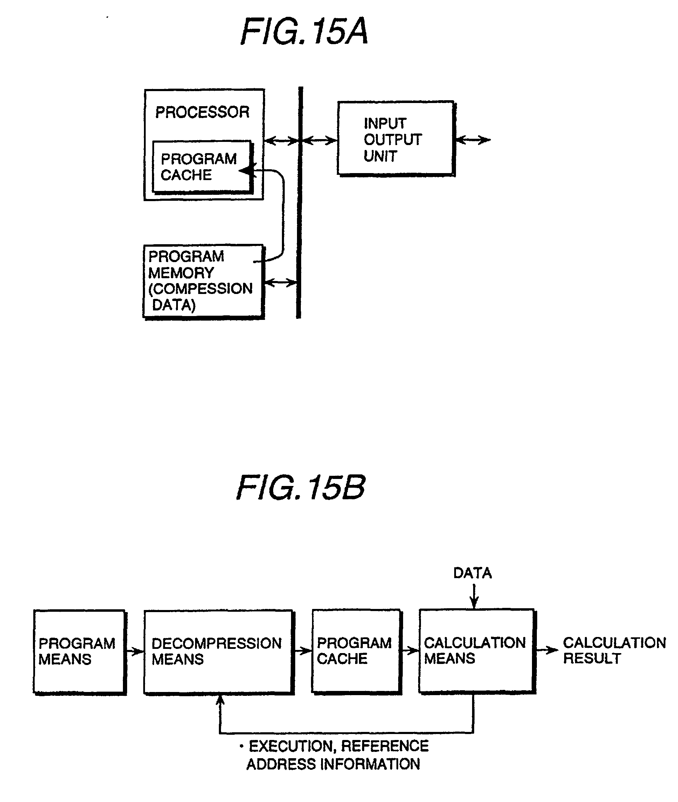

The apparatus constitutional example is shown in Fig. 15A. Because it is impossible *to* directly *refer* to the absolute address of the program in case of the variable compression rate, the following measures are needed.
(a) The data are decompressed in advance in the cache memory, etc..
(b) Means for adding indexes to refer to the absolute address for every program step becomes necessary.

An example of the procedure of signal processing by the apparatus of Fig. 15A is shown in Fig. 15B.

### (8) Multiple media apparatus

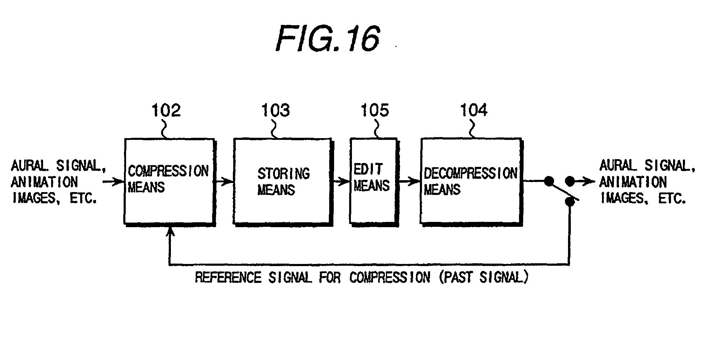

The signal processing equipment can be applied to constitute the apparatus for inputting, storing, forming, editing and storing several signals of different characteristics. This is applied to signals having correlativity in the time base direction, such as audio signals, animation images, etc., as shown in Fig. 16. Since compression means 102 can compress signals by using signal correlativity of the time base direction, the effective compression can be done by referring to the past signals. Then, only signals to be referred to for compression processing are restored and can be used by edit means 105, if the past data to be referred to are stored in storing means 103 as compression data. As same as above, when the compression data are decompressed by decompression means 104, the past signals also can be referred to.

### (9) Compression means of the color image

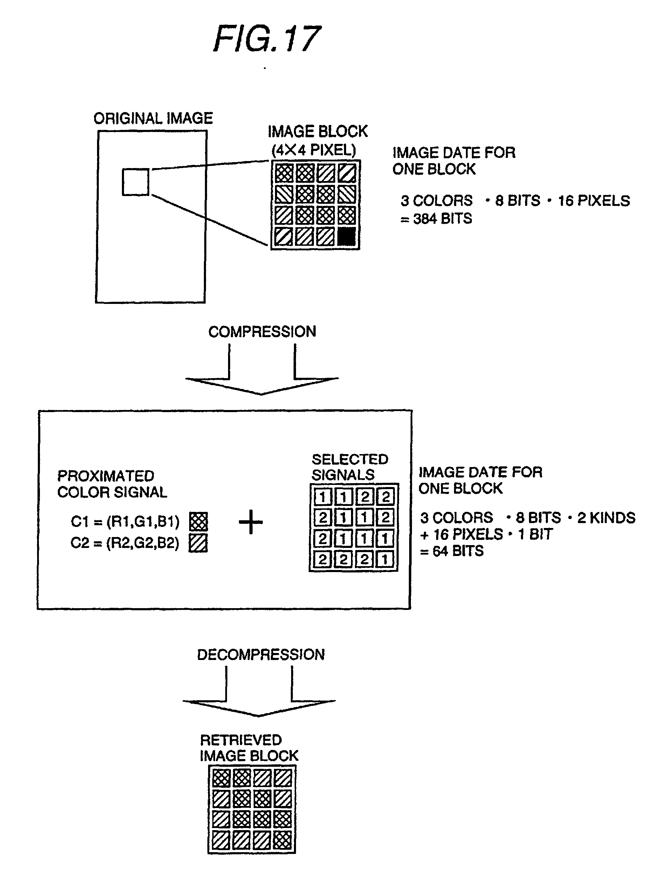

An example of the compression method according to the present invention for color images is shown in Fig. 17. Colors generated in the blocks ( color decided by combination of the three elementary color signals) are limited to about two colors and made approximated as one block of adjacent several pixels from the image data. Then, the selected result of the limited color is created about each pixel in the block. Therefore, if three colors (for example, RGB; red, green and blue) are each 8 bit signal of 16 pixels of the block size, 384 bits are necessary for the original data. When approximating the colors to two colors, the data can be compressed to 64 bits which is 1/6. Like this, the visual degradation of picture quality is hardly recognized by limiting the kinds of colors generated in the small areas.

The compression rate achieved by this means does not depend on the characteristics of the image data of the signals. The compression data can be differentiated to the signals representing the kinds of the colors and the signal representing the selection result of the color of each pixel. Therefore, in order to transform colors, it is enough to use signal-processing of the compression data of the former, and to use signal-processing such as the minification of the rotation and expansion, etc. for the latter. In order to rewrite the part of the image data, only compression data corresponding to the place of the image can be rewritten.

The block size can be made adjustable, and the value of the fixed compression rate changes in accordance with the set size. Therefore, on the basis of the storing capacity (memory capacity) of the storing means, the block size is set to set the compression rate so as to be able to store the compression data in the memory.

### Industrial Applicability

As mentioned above, the signal processing equipment of the present invention reduces the capacity of the memory for storing the image data, and the data transfer rate among means is increases. Further, the formation and the edit of the image data can be executed at high speed. The present invention is suitable for the signal processing equipment to print and display the image.

## Claims

1. A signal processing equipment comprising:
compression means (102) for converting an input signal being composed of a plurality of pixels each having a plurality of color signals (R1, G1, B1) into compressed data which is compressed at a fixed compression rate,
wherein said compression means (102) comprises:
means for dividing said input signal into a plurality of blocks each being composed of a predetermined number of pixels,
means for calculating approximated color signals (C1, C2) based on said plurality of color signals in one of said blocks,
means for approximating said plurality of color signals of each pixel in said block to said calculated approximated color signals,
means for selecting one approximated color signal for each pixel in said block corresponding to the pixel, and
means for converting said plurality of color signals of each pixel in said block into said calculated approximated color signals and said selected results of said approximated color signal for each pixel in said block;
storing means (103) for storing compressed data;
a decompression means (104) for converting said compressed data into decompressed data; and
a processor (105) which reads stored compressed data from said storing means,
wherein said processor (105) reads said compressed data from said storing means, rewrites a part of said compressed data, and stores the rewritten compressed data to said storing means.

2. A signal processing equipment according to claim 1, wherein said processor (105) reads out compressed data for rewriting from said storing means (103), calculates an address in said storing means (103) in which said compressed data for rewriting are stored, rewrites said compressed data for rewriting and stores the rewritten compressed data into said storing means (103) at an address which corresponds to said calculated address.

3. A signal processing equipment according to claim 1, wherein a size of said block can be optionally changed.

## Patentansprüche

1. Vorrichtung zur Signalverarbeitung enthält:
Kompressionseinrichtung (102) zur Umwandlung eines aus einer Vielzahl von Pixeln, bestehend aus einer Mehrzahl von Farbsignalen (R1, G1, B1), bestehenden Eingangssignals in komprimierte Daten mit einer konstanten Kompressionsrate,
wobei die Kompressionseinrichtung enthält:
Einrichtung zur Teilung der Eingangssignale in mehrere, aus einer vorher festgelegten Anzahl von Pixeln bestehenden, Blöcke, Einrichtung zur Berechnung von Näherungsfarbsignalen (C1, C2), basierend auf der Mehrzahl der Farbsignale in einem der Blöcke, Einrichtung zur Annäherung der Mehrzahl der Farbsignale jedes Pixels in dem Block an das berechnete Näherungsfarbsignal, Einrichtung zur Auswahl eines Näherungsfarbsignals für jedes Pixel in dem Block, das dem Pixel entspricht, und
Einrichtung zur Umwandlung der Mehrzahl der Farbsignale jedes Pixels in dem Block in die berechneten Näherungsfarbsignale und die ausgewählten Ergebnisse der Näherungsfarbsignale für jedes Pixel in dem Block;
Speichereinrichtung (103) zur Speicherung der komprimierten Daten;
Dekompressionseinrichtung (104) zur Umwandlung der komprimierten Daten in dekomprimierte Daten; und
einem Prozessor (105), der die gespeicherten komprimierten Daten aus der Speichereinrichtung ausliest,
wobei der Prozessor (105) die komprimierten Daten aus der Speichereinrichtung ausliest, einen Teil der komprimierten Daten umschreibt, und die umgeschriebenen komprimierten Daten in der Speichereinrichtung speichert.

2. Vorrichtung zur Signalverarbeitung gemäß Anspruch 1, wobei der Prozessor (105) komprimierte Daten zur Umschreibung aus der Speichereinrichtung (103) ausliest, eine Adresse zur Speicherung der umgeschriebenen komprimierten Daten in der Speichereinrichtung (103) berechnet, die umzuschreibenden komprimierten Daten umschreibt und die umgeschriebenen komprimierten Daten in der Speichereinrichtung (103) an der Adresse, die der berechneten Adresse entspricht, speichert.

3. Vorrichtung zur Signalverarbeitung gemäß Anspruch 1, wobei die Blockgröße optional verändert werden kann.

## Revendications

1. Equipement de traitement des signaux comprenant :
des moyens de compression (102) pour convertir un signal d'entrée constitué d'une pluralité de pixels, chacun ayant une pluralité de signaux couleur (R1, G1, B1), en données compressées à un taux de compression déterminé,
dans lequel lesdits moyens de compression (102) comprennent :
des moyens pour diviser ledit signal d'entrée en une pluralité de blocs, chacun étant composé d'un nombre prédéterminé de pixels,
des moyens pour calculer les signaux couleur approchés (C1, C2) sur la base de ladite pluralité de signaux couleur dans l'un desdits blocs,
des moyens pour approcher ladite pluralité de signaux couleur de chaque pixel dans ledit bloc desdits signaux couleur approchés calculés,
des moyens pour sélectionner un signal couleur approché pour chaque pixel dans ledit bloc correspondant au pixel, et
des moyens pour convertir ladite pluralité de signaux couleur de chaque pixel dans ledit bloc en lesdits signaux couleur approchés calculés et lesdits résultats sélectionnés dudit signal couleur approché pour chaque pixel dans ledit bloc ;
des moyens de stockage (103) pour stocker les données compressées ;
un moyen de décompression (104) pour convertir lesdites données compressées en données décompressées ; et
un processeur (105) qui lit les données compressées stockées provenant desdits moyens de stockage,
dans lequel ledit processeur (105) lit lesdites données compressées provenant desdits moyens de stockage, réécrit une partie desdites données compressées et stocke les données compressées réécrites dans lesdits moyens de stockage.

2. Equipement de traitement des signaux selon la revendication 1, dans lequel ledit processeur (105) lit les données compressées pour la réécriture à partir des moyens de stockage (103), calcule une adresse dans lesdits moyens de stockage (103) dans lequel sont stockées lesdites données compressées pour la réécriture, réécrit lesdites données compressées pour la réécriture et stocke les données compressées réécrites dans lesdits moyens de stockage (103) à une adresse qui correspond à ladite adresse calculée.

3. equipement de traitement des signaux selon la revendication 1, dans lequel la taille dudit bloc peut être éventuellement modifiée.
